# FASCICULE DE BREVET EUROPEEN

(11) **EP 0 777 355 B1**
(45) Date de publication et mention de la délivrance du brevet: **11.02.2004**
(21) Numéro de dépôt: 96402546.4
(22) Date de dépôt: 26.11.1996
(51) Int. Cl.: H04L 1/22, G06F 11/16, G05B 9/03, G06F 11/20

(54) **Procédé de sécurisation d'une action et dispositif de mise en oeuvre utilisant le protocole ARINC 629**
Sichere Datenübertragung zur Prozessausführung mit dem ARINC 629 Protokoll
Secure data transmission and processing using the ARINC 629 protocol

(30) Priorité: 01.12.1995 FR 9514337
(43) Date de publication de la demande: 04.06.1997
(73) Titulaire: THALES AVIONICS S.A., 78141 Vélizy Villacoublay Cédex (FR)
(72) Inventeur: Eudeline, Patrice, Thomson-CSF, SCPI, 94117 Arcueil Cedex (FR); Gansmandel, Frank, Thomson-CSF, SCPI, 94117 Arcueil Cedex (FR); Toillon, Patrice, Thomson-CSF, SCPI, 94117 Arcueil Cedex (FR)
(74) Mandataire: Chaverneff, Vladimir

(56) Documents cités:
- EP-A- 0 182 134
- EP-A- 0 473 834
- EP-A- 0 611 171
- WO-A-85/02698
- US-A- 4 610 013

## Description

La présente invention se rapporte à un procédé de sécurisation d'une action et à un dispositif de mise en oeuvre de ce procédé.

Dans certains systèmes, tels que les équipements d'aéronefs, comportant plusieurs appareils émettant et/ou recevant des signaux optiques ou électriques, ces signaux sont émis de façon asynchrone, c'est-à-dire de façon complètement indépendante les uns par rapport aux autres. En général, ces signaux transitent sur un bus dit : "bus avion". Afin qu'il n'y ait pas de chevauchement de ces signaux sur le bus, un protocole de transmission normalisé (ARINC 629) fixe les instants d'émission des équipements ayant des informations à envoyer. Ces équipements comportent chacun en général des unités de comptage et de séquencement, cadencées par une horloge externe, et recevant des signaux représentant divers événements externes indépendants entre eux (signaux de capteurs, commandes, ...). Le séquenceur implémente un algorithme élaborant, à partir des différents événements externes et des informations générées par l'unité de comptage, un signal résultat unique, représentant par exemple un ordre ou une autorisation d'émission sur le bus vers un ou plusieurs autres équipements. Bien entendu, les divers équipements doivent générer à tour de rôle leur signal résultat, pour éviter tout chevauchement d'informations sur le bus, ce dont est chargé le protocole de transmission ARINC 629. Toutefois, il se peut que, par suite de dérives des composants des compteurs et séquenceurs, les signaux résultants des équipements soient émis en-dehors des fenêtres temporelles qui leur sont assignées. Pour éviter des conséquences néfastes de tels phénomènes, on peut élargir les fenêtres temporelles , ce qui ne convient pas dans certaines applications, ou bien choisir des composants à dérive réduite, mais cela augmente sensiblement le prix de revient des équipements.

La présente invention a pour objet un procédé permettant, dans un système comprenant un bus auquel sont reliés divers équipements envoyant sur ce bus des informations élaborées à partir d'un ou plusieurs événements asynchrones, d'annuler ou de réduire considérablement les risques de chevauchement des informations émises par ces équipements, sans dégrader les performances de ce système et sans nécessiter de composants onéreux.

La présente invention a également pour objet un dispositif de mise en oeuvre d'un tel procédé.

Le procédé conforme à l'invention est caractérisé en ce que l'on déclenche, par exemple à partir d'un même signal asynchrone incident, deux processus de comptage indépendants l'un de l'autre, que l'on vérifie la coïncidence temporelle des fins de comptage de ces deux processus, qu'à partir des informations de vérification de chacun de ces deux processus de comptage, on déclenche, selon un séquencement spécifique de l'application considérée, une action intermédiaire non consolidée pour chacun des deux processus de séquencement, et après avoir vérifié la coïncidence temporelle des actions intermédiaires, et tenu compte d'éventuelles actions externes prioritaires, on produit une action résultante si toutes les conditions nécessaires sont remplies.

Le dispositif conforme à l'invention se compose d'au moins une section à au moins un couple de deux voies de décision indépendantes entre elles, chaque section comportant un dispositif de comptage suivi d'au moins un dispositif de séquencement, un premier dispositif de comparaison étant relié aux sorties des dispositifs de comptage d'un même couple d'une même section , et un second dispositif de comparaison étant relié aux sorties des dispositifs de séquencement d'un même couple d'un même section, la sortie du dispositif de séquencement de l'une des voies de l'un au moins des couples de chaque section pouvant être reliée aux entrées d'au moins l'un des couples de cette section.

La présente invention sera mieux comprise à la lecture de la description détaillée d'un mode de réalisation, pris à titre d'exemple non limitatif et illustré par le dessin annexé, sur lequel :
- la figure 1 est un schéma général simplifié d'une section à plusieurs couples de voies de décision, conforme à l'invention,
- la figure 2 est un schéma similaire à celui de la figure 1, montrant les différentes informations pouvant être envoyées aux différents dispositifs composant la section, dans l'exemple d'application à la prise de décision d'une émission sur un bus,
- la figure 3 est un schéma détaillé de circuits de la section de la figure 1,
- la figure 4 est un ensemble de chronogrammes de signaux apparaissant dans le circuit de la figure 1 ,
- la figure 5 est un schéma d'éléments fonctionnels du circuit de la figure 1, et
- la figure 6 est un schéma simplifié de l'application du circuit de l'invention à un bus ARINC 629.

L'invention est décrite ci-dessous en référence à la prise de décision d'une émission d'informations sur un bus de type ARINC 629, mais il est bien entendu qu'elle n'est pas limitée à une telle application, et qu'elle peut être mise en oeuvre dans divers systèmes ayant à produire un événement (signal de déclenchement ou d'autorisation d'une action, par exemple) en fonction de divers états et signaux asynchrones et du déroulement d'une séquence algorithmique.

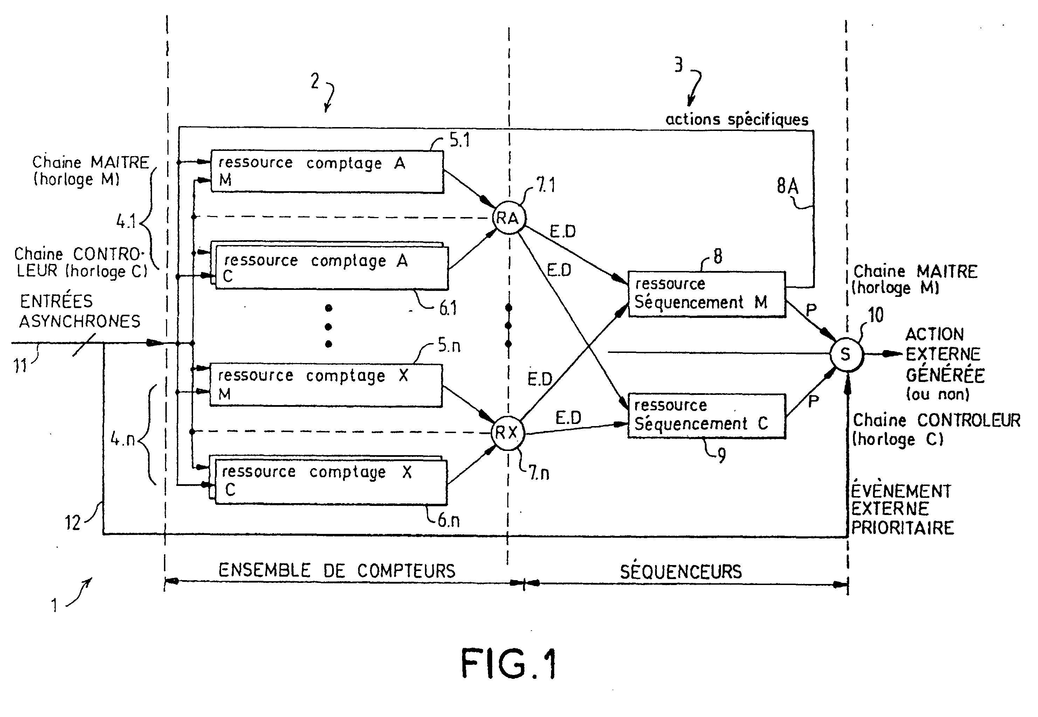

On a représenté en figure 1 une section 1 de chaîne de décision conforme à l'invention. Dans la présente description, on entend par chaîne le circuit comportant un compteur et un séquenceur. Cette section se compose de deux ensembles : un ensemble 2 de compteurs, suivi d'un ensemble 3 de séquenceurs. L'ensemble 2 comporte n paires de chaînes de décision identiques 4.1 à 4.n. Ces paires de chaînes identiques seront simplement dénommées couples par la suite. Chaque couple 4.1 à 4.n comporte une ressource de comptage maître (5.1 à 5.n) et une ressource de comptage contrôleur (6.1 à 6.n). Ces ressources sont toutes indépendantes entre elles. Dans chaque couple, les sorties des deux ressources sont reliées à un "point de rendez-vous fonctionnel" (7.1 à 7.n) décrit ci-dessous. L'ensemble 3 comprend une ressource de séquencement maître 8 et une ressource de séquencement contrôleur 9. Les sorties de chacun des points de rendez-vous 7.1 à 7.n sont reliées chacune à la ressource 8 et à la ressource 9. Le nombre de couples 8,9 n'est pas limité. Une sortie de séquencement 8.A. de la ressource 8 est reliée aux entrées des ressources de comptage 5.1 à 5.n et 6.1 à 6.n. Les sorties (de fin de séquencement) des ressources 8 et 9 sont reliées à une unité logique de consolidation et de décision 10, dont la sortie constitue la sortie d'action externe consolidée de la section 1. Des informations d'entrée asynchrones 11 sont envoyées aux différentes ressources 5.1 à 5.n et 6.1 à 6.n. Parmi ces informations, il peut y avoir également une information 12, qui est dans ce cas un événement externe prioritaire, envoyé directement à la fonction 10, qui, lorsqu'il survient, inhibe la sortie de la fonction 10. Les ressources 5.1. à 5.n et 8 sont dites "maîtres", tandis que les ressources 6.1 à 6.n et 9 sont dites "contrôleur" (et non pas "esclaves"), du fait que les commandes internes (8.A) de pilotage de l'ensemble 2 par l'ensemble 3, c'est-à-dire les commandes de l'état des compteurs (remise à zéro ou forçage à un état déterminé) de l'ensemble 2 sont produites uniquement par la chaîne maître (compteurs maîtres et séquenceur maître), les ressources "contrôleur" étant ensuite totalement indépendantes des ressources "maître", comme précisé ci-dessus.

De façon générale, les ressources de l'ensemble 2 assurent des fonctions de comptage et de surveillance et font office de base de temps consolidée, tandis que les ressources de l'ensemble 3 assurent des fonctions de séquencement et de surveillance, faisant office de dispositif d'élaboration et de génération consolidée de l'action que doit délivrer la section 1.

A la sortie des circuits 7.1 à 7.n, on obtient des informations du type "temps de comptage ("timer " en anglais) écoulé ou non écoulé" et "incohérence de l'écoulement du temps de comptage". Ceci permet à l'ensemble 3 de contrôler l'algorithme de séquencement (mis en oeuvre par les ressources 8 et 9, indépendamment l'une de l'autre) associé à l'événement à produire à la sortie du circuit 10. L'ensemble 3 peut fournir à l'ensemble 2, via la liaison 8A, des commandes internes de pilotage sous forme de demandes de modification de l'état de ses compteurs.

Les "points de rendez-vous fonctionnel" 7.1 à 7.n et 10 sont des circuits logiques permettant de déterminer la simultanéité de l'arrivée, dans une fenêtre temporelle, des signaux en provenance des ressources de comptage et de séquencement, respectivement, qui leur sont reliées. Ces signaux sont produits par les compteurs lorsqu'ils arrivent à un état déterminé (par construction, ou par la ressource de séquencement 8). La largeur de ces fenêtres temporelles est fonction des dérives relatives acceptables des horloges de pilotage des ressources de comptage et de séquencement, ainsi que de la configuration intrinsèque des ressources correspondantes. Lorsque lesdits signaux arrivent dans la même fenêtre temporelle, les circuits logiques 7.1 à 7.n et 10 produisent un signal de sortie "consolidé", c'est-à-dire un signal dont l'on est sûr qu'il a été produit par des circuits qui n'ont pas été défectueux, du fait de l'indépendance de la configuration et du pilotage de la chaîne Maître par rapport à la configuration et au pilotage de la chaîne Contrôleur. Dans le cas contraire, c'est-à-dire si, pour un couple 4.1 à 4.n donné, aucun des signaux maître et contrôleur n'arrive dans la fenêtre temporelle, ou bien si seulement l'un d'eux est présent dans cette fenêtre, par suite de la dérive d'une chaîne (contrôleur) par rapport à l'autre (maître), le "point de rendez-vous" signale ce fait à l'autre chaîne et à l'autre ensemble 3. Cet ensemble 3 inhibe alors la production de l'événement que devrait produire le circuit 10.

Dans chaque section, le seul point commun entre la chaîne maître et la chaîne contrôleur est constitué par les points de rendez-vous correspondants. Ce point de rendez-vous est avantageusement de construction extrêmement simple, à base de circuits logiques élémentaires. On assure ainsi une grande fiabilité de l'information "temps de comptage écoulé" ou "fin de séquence", par exemple, donc une grande fiabilité de toute la section.

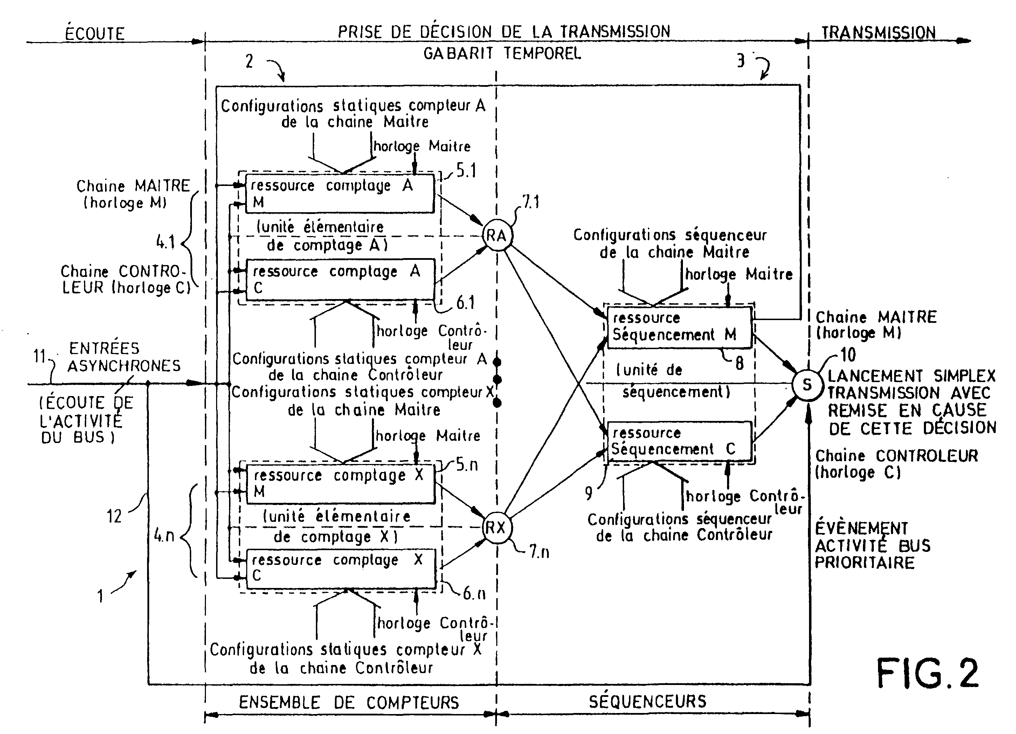

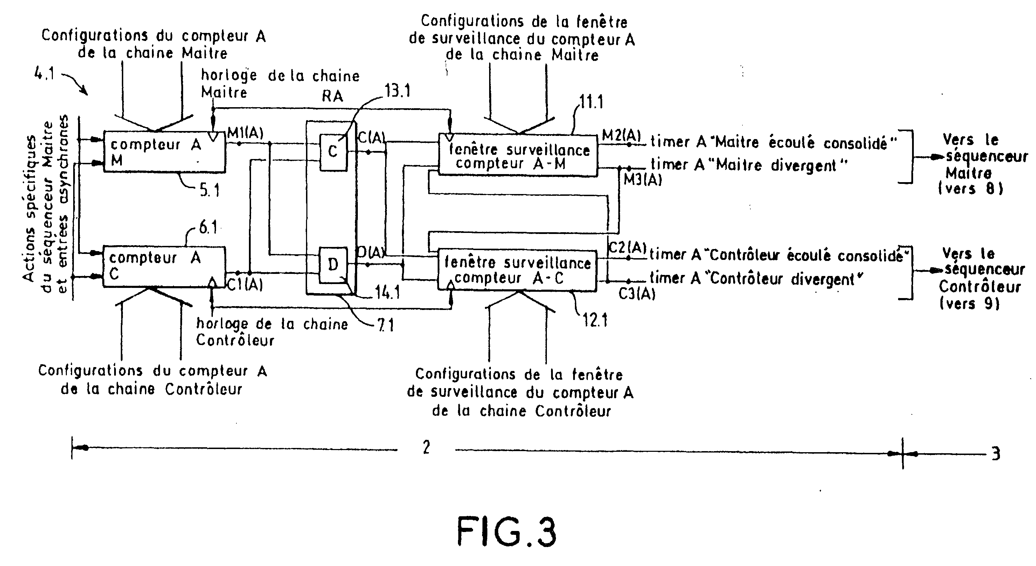

Pour le détail du fonctionnement des circuits décrits ci-dessus, on va se référer aux figures 2 et 3. On examinera par exemple le couple 4.1.

La ressource maître du couple 4.1 comprend le compteur 5.1 fournissant un événement intermédiaire (information non consolidée) M1(A) du type "Temps de comptage Maître écoulé ou non", et une fenêtre 11.1 de surveillance des compteurs 5.1 et 6.1 branchés après le point de rendez-vous 13.1, fournissant des événements globaux (informations consolidées) M2(A) du type "Temps de comptage Maître écoulé consolidé ou non" et M3(A) du type "Temps de comptage Maître divergent ou non".

Dans ledit couple 4.1, la ressource contrôleur de comptage comprend le compteur 6.1. fournissant un événement intermédiaire (information non consolidée) C1(A) du type "Temps de comptage Contrôleur écoulé ou non", et une fenêtre 12.1 de surveillance des compteurs 5.1 et 6.1, fournissant des événements globaux (informations consolidées) C2(A) du type "Temps de comptage Contrôleur écoulé consolidé ou non" et C3(A) du type "Temps de comptage de Contrôleur divergent ou non".

Les deux ressources Maître 5.1 et Contrôleur 6.1 sont indépendantes entre elles et partagent l'unité logique 7.1 de consolidation et de détection. Cette unité logique peut comporter des ensembles de portes logiques dont la réalisation est évidente pour l'homme de l'art à la lecture de la présente description. L'unité logique comprend deux sous-ensembles logiques : 13.1 (de consolidation) et 14.1 (de détection de divergence). Tous les couples 4.1 à 4.n ont la même structure, seules leurs commandes de pilotage (arrêt, lancement et forçage à une valeur déterminée des compteurs) et leurs configurations statiques sont spécifiques à chaque couple. Ces commandes sont externes ou fournies par la chaîne Maître de l'ensemble 3.

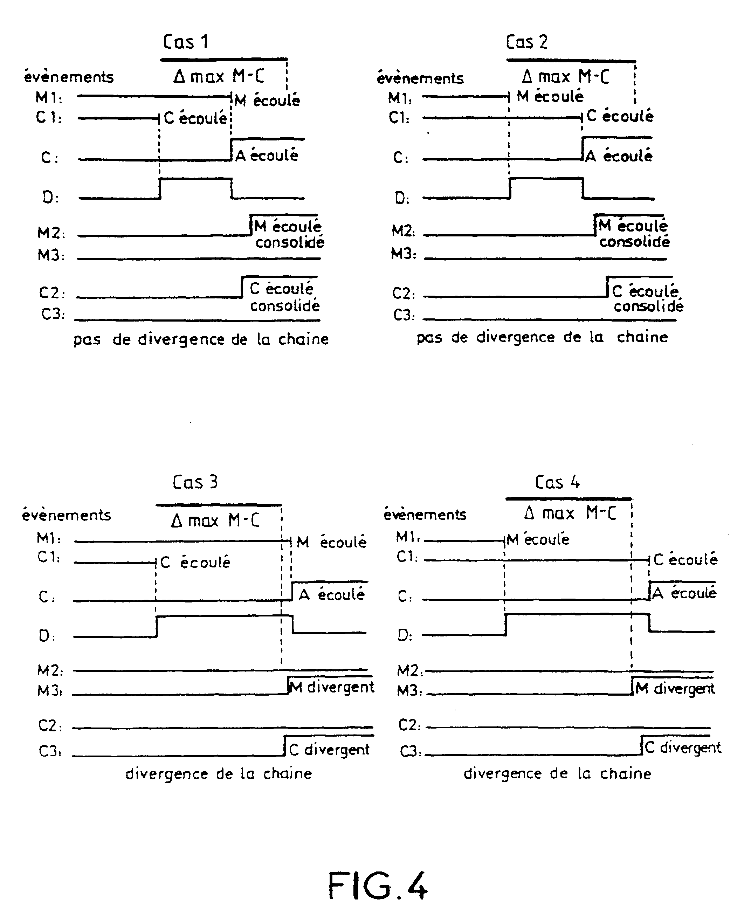

Le "point de rendez-vous fonctionnel entre les compteurs 5.1 et 6.1 du couple 4.1 est obtenu lorsque les deux événements intermédiaires "Temps de comptage écoulé" (M1 et C1) issus des chaînes Maître et Contrôleur sont présents (en fonction de l'application considérée) ensemble dans une fenêtre temporelle, dont la largeur est fonction de la valeur assignée aux compteurs 5.1 et 6.1 (cas 1 et cas 2 de la figure 4) ou bien peut être reconfigurée en fonction de l'état courant du séquencement (produit par l'ensemble 3). Dans ce cas, on peut considérer que, globalement, l'écoulement du temps de comptage des compteurs 5.1 et 6.1 est normal.

L'absence de "rendez-vous fonctionnel " survient lorsque l'un des deux événements intermédiaires "Temps de comptage écoulé" issus de la chaîne Maître ou de la chaîne Contrôleur n'arrive pas dans la fenêtre temporelle prédéfinie (cas 3 et cas 4 de la figure 4), il y a alors production d'une information "Compteurs divergents", c'est-à-dire que, globalement, l'écoulement du temps du couple 4.1 est anormal, ce qui peut entraîner une procédure d'exception (engagement d'une séquence de ralliement vers des états déterminés, ou action d'un système de contrôle extérieur -non représenté-).

Le premier des deux événements intermédiaires M1(A) ou C1 (A) à survenir provoque l'activation du signal D(A) (en sortie du sous-ensemble 14.1), ce qui indique un écart d'arrivée de l'état "écoulé" de l'un des deux compteurs du couple 4.1.

Le signal D(A) provoque, après resynchronisation (par les signaux d'horloge des fenêtres 11.1 et 12.1) le lancement du décomptage de la fenêtre de surveillance de la chaîne Maître et de la chaîne Contrôleur. Le second des événements intermédiaires M1(A) ou C1(A) à survenir provoque la désactivation du signal D(A) et l'activation du signal C(A), qui signifie "Temps de comptage globalement écoulé".

Si l'activation du signal C(A) arrive avant la fin de l'écoulement de la fenêtre de surveillance (telle que définie par la configuration des compteurs 5.1 et 6.1), leurs décomptages (ou comptages) s'arrêtent, et les événements globaux M2(A) et C2(A) sont produits, ce qui signifie la consolidation des informations des compteurs 5.1 et 6;1, qui sont resynchronisées pour pouvoir être facilement et sûrement exploitées par les ressources de l'ensemble 3.

Le premier des événements globaux M3(A) ou C3(A) (à la sortie des fenêtres 11.1 et 12.1) à survenir force le positionnement temporel de l'autre événement M3(A) ou C3(A) et inhibe toutes les activations ultérieures des événements globaux M2(A) et C2 (A) avant un nouveau forçage à une valeur déterminée des compteurs 5.1 et 6.1. Cela veut dire que le premier de ces deux compteurs 11.1 et 12.1 des fenêtres de surveillance qui arrive à sa valeur finale de décomptage (ou de comptage) a détecté une largeur du signal D(A) supérieure à celle déterminée pour la configuration courante des compteurs du couple 4.1,. Ceci génère l'événement "compteurs divergents" et provoque le déclenchement d'une procédure d'exception.

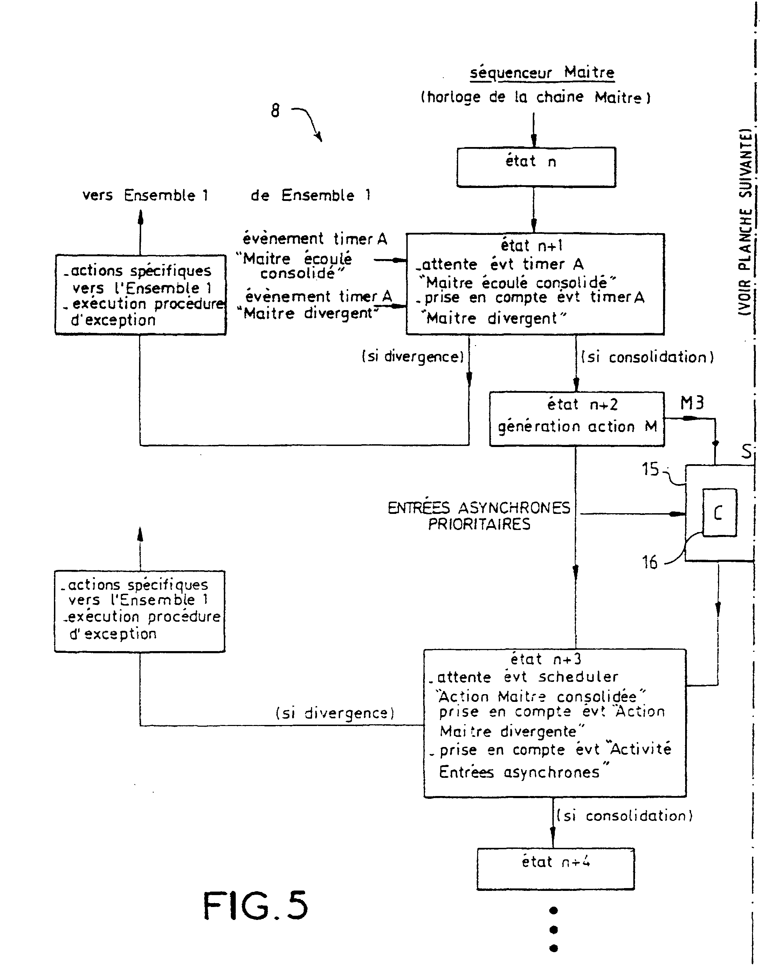

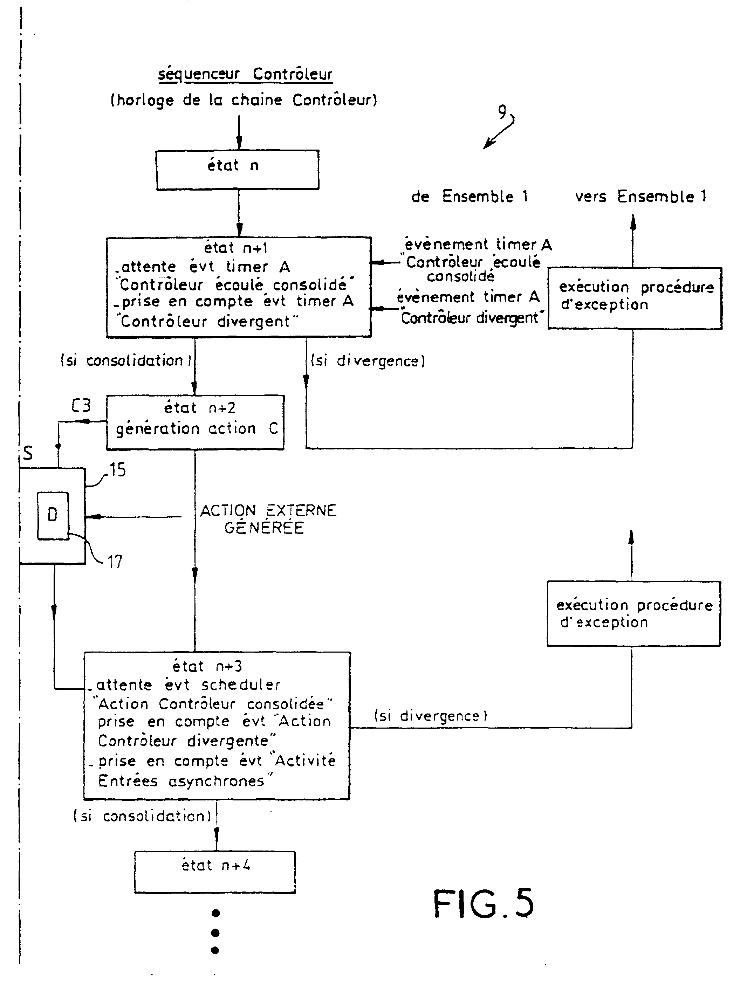

Comme représenté en figure 5, l'ensemble 3 de séquencement et de surveillance est composé de deux ressources identiques: une dite "Maître" (8) et une dite "Contrôleur" (9). Chacune utilise les informations "Temps de comptage écoulé consolidé" et "Compteurs divergents" fournies par l'ensemble 2 pour générer son action intermédiaire non consolidée ( action M et action C ).

Du point de vue fonctionnel, les ressources 8 et 9 sont structurées en cellules de séquencement successives et indépendantes les unes des autres. A la fin de chacune de ces cellules, une unité logique 15, comportant des sous- ensembles 16 ( de type C comme 13.1 ) et 17 ( de type D comme 14.1 ) semblables à ceux de l'unité 7.1, permet la gestion des "Rendez- vous fonctionnels" entre Maître et Contrôleur. Ces cellules sont identiques ( dans le cas présent) pour ce qui est de leurs nombres d'états. Leur dérive relative est fixe et prédéfinie. La seule dissimilarité réside dans le fait que la chaîne Maître effectue les actions spécifiques vers l'ensemble 2 ( commande des compteurs), la chaîne Contrôleur n'ayant pas d'action externe.

Une unité logique 17 est située à chaque point de génération d'une action externe sécurisée de la chaîne globale (Maître + contrôleur). Cette unité prend aussi en compte directement tout événement externe prioritaire asynchrone, ce qui permet de remettre en cause de manière ultime la décision de génération de l'action, et de réactiver le séquencement.

Le " Rendez- vous fonctionnel" de l'unité de séquencement est obtenu lorsque les deux événements intermédiaires Action M et Action C, produits par les chaînes Maître et Contrôleur, arrivent dans une fenêtre de coïncidence temporelle prédéfinie de taille minimale. Ceci signifie que, globalement, les deux chaînes sont arrivées en synchronisme, et valident l'action externe.

L'absence de "Rendez- vous fonctionnel" survient lorsque l'un des deux événements intermédiaires Action M ou Action C n'arrive pas dans la fenêtre temporelle prédéfinie, c'est-à-dire que , globalement, les deux chaînes n'arrivent pas en synchronisme, ce qui interdit la génération de l'action externe et entraîne le passage en procédure d'exception.

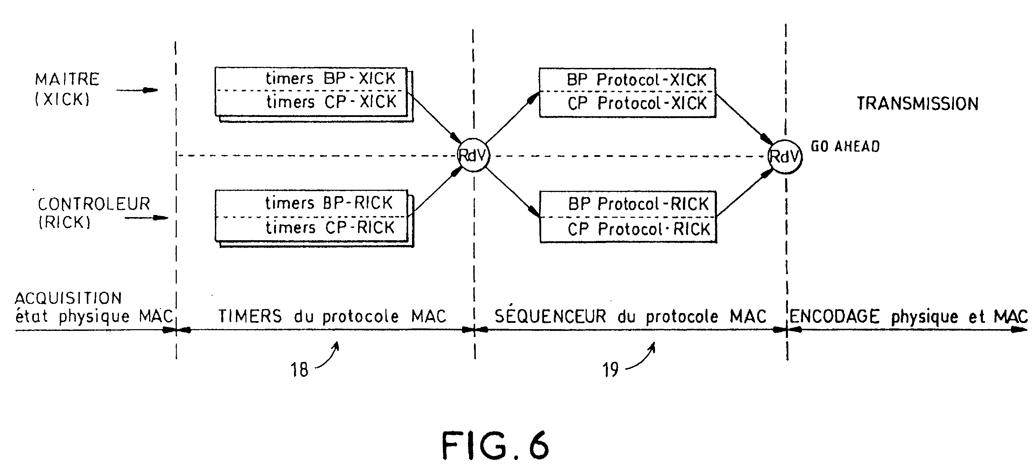

Le schéma de la figure 6 se rapporte au cas du bus ARINC 629, correspondant à une application avantageusement intégrée dans un composant d'une structure globale Maître- Contrôleur pour la prise de décision d'une émission qui est alors le lancement simplex d'une transmission "GO AHEAD".

L'ensemble 18 (similaire à l'ensemble 2) est composé d'un groupe de cinq compteurs pour les signaux généralement dénommés: TI, ASG/SG, TG, PSG et AT. Ces compteurs sont également à structure en couple dont chacun comprend un couple Maître- Contrôleur de comptage ( TI_X/ TI_R pour le compteur TI , par exemple) et un couple Maître- Contrôleur de surveillance (WTI_X / WTI_R pour le compteur Tl, par exemple). Ce groupe fournit des bases de temps consolidées (TI écoulé_X / TI écoulé_R et TI divergent_X / TI divergent_R) à l'ensemble 19 (similaire à l'ensemble 3) pour élaborer le séquencement BP ou CP de la norme ARINC 629.

L'état courant du bus ( actif ou inactif) est fourni par un bloc d'écoute externe au système décrit ici. Cette information est asynchrone. Elle est utilisée pour le pilotage des compteurs ASG/SG, TG et PSG. Le résultat de comptage de chaque compteur est issu de deux compteurs, l'un fonctionnant à partir des signaux d'horloge XICK, et l'autre à partir des signaux d'horloge RICK. La consolidation commune au niveau de chaque compteur correspond à un ET logique. Le lancement de chaque surveillance de compteur correspond à un OU Exclusif. logique.

L'ensemble 19 ( séquenceur du protocole MAC, c'est-à-dire "Medium Access Control" ) est composé d'un séquenceur dédié à chacun des protocoles BP ou CP. Chaque séquenceur est à structure en couple, dont les éléments sont identiques. Le Maître fonctionne à partir de l'horloge XICK , tandis que le Contrôleur fonctionne à partir de l'horloge RICK. Ils utilisent les bases de temps consolidées de l'ensemble 18, ainsi que l'information externe "état courant du bus".

Le contrôleur ne produit pas d'action externe ( pas de rétroaction vers l'ensemble 18). Le Maître fournit les ordres de contrôle des compteurs de l'ensemble 18 ( START TI, ELAPSE TI, RESET SG/AG, RESET TG, RESET PSG, START AT ).

Le résultat du déroulement de chaque section du séquencement est un signal intermédiaire "GO_AHEAD" Maître et "GO_AHEAD" Contrôleur. La consolidation commune des chaînes s'effectue uniquement au niveau de ces deux signaux et correspond à leur ET logique. Le lancement de la surveillance correspond à leur OU Exclusif logique.

L'unité de consolidation et de surveillance de l'ensemble 19 effectue la prise en compte ultime de l'information externe "état courant du bus" , de manière qu'en cas de détection d'une activité sur le bus ARINC 629, la décision d'émettre puisse être immédiatement remise en cause. Ce processus est fondamental pour prendre en compte l'activité réelle du bus tout au long de la chaîne de prise de décision de l'émission (écoute de porteuse).

La structure de cette chaîne de décision permet d'obtenir en sortie des valeurs précises (à un cycle d'horloge près) des différents temps normalisés (TI, TI+TG, PSG+TG, ASG/SG+TG, TG, AT ). Grâce à cette précision, on assure la précision temporelle de l'émission de l'équipement sur le bus ARINC 629 à multiplexage temporel.

Le procédé de la présente invention permet ainsi la détection et la signalisation de toute "simple faute" ( faute unique du point de vue temporel), et , en général, de la plupart des doubles fautes. Le terme "faute" englobant des erreurs de configuration, des dégradations ( court- circuits, collage à un niveau logique, circuit ouvert,...) , l'absence de signaux d'horloge, des variations de fréquence, etc. Il permet également de respecter des gabarits temporels très précis ( jusqu'à une période d'horloge), améliorant ainsi la finesse temporelle d'une prise de décision d'action.

## Revendications

1. Procédé de sécurisation d'une action , **caractérisé en ce que** l'on déclenche deux processus de comptage indépendants l'un de l'autre, que l'on vérifie la coïncidence temporelle des fins de comptage (M1 et C1) de ces deux processus, qu'à partir des informations de vérification de chacun de ces deux processus de comptage (M2 et C2), on déclenche, selon un séquencement spécifique de l'application considérée, une action intermédiaire non consolidée (M3 et C3) pour chacun des deux processus de séquencement, et après avoir vérifié la coïncidence temporelle des actions intermédiaires, et tenu compte d'éventuelles actions externes prioritaires, on produit une action résultante si toutes les conditions nécessaires sont remplies.

2. Procédé selon la revendication 1, **caractérisé par le fait que** les deux processus de comptage sont déclenchés à partir d'un même signal asynchrone incident.

3. Procédé selon la revendication 1 ou 2, **caractérisé par le fait qu'**il est mis en oeuvre pour un bus ARINC 629.

4. Dispositif de sécurisation d'une action , **caractérisé par le fait qu'**il comporte au moins une section (1) à au moins un couple (4.1 à 4.n) de deux voies de décision indépendantes entre elles, chaque section comportant un dispositif de comptage (5.1 à 5.n et 6.1 à 6.n) suivi d'au moins un dispositif de séquencement (8, 9), un premier dispositif de comparaison (7.1 à 7.n) étant relié aux sorties des dispositifs de comptage d'un même couple d'une même section , et un second dispositif de comparaison (10) étant relié aux sorties des dispositifs de séquencement d'un même couple d'un même section, la sortie (8A) du dispositif de séquencement de l'une des voies de l'un au moins des couples de chaque section pouvant être reliée aux entrées d'au moins l'un des couples de cette section.

## Claims

1. Method for making an action secure, **characterized in that** two mutually independent counting processes are initiated, that the temporal coincidence of the ends of counting (M1 and C1) of these two processes is verified, that from the verification data of each of these two counting processes (M2 and C2) there is initiated, according to a specific sequencing of the application in question, an intermediate non-consolidated action (M3 and C3) for each of the two sequencing processes and, after having verified the temporal coincidence of the intermediate actions and having taken account of possible priority external actions, a resultant action is produced if all of the necessary conditions are met.

2. Method according to Claim 1, **characterized in that** the two counting processes are initiated from a same incoming asynchronous signal.

3. Method according to Claim 1 or 2, **characterized in that** it is used for an ARINC 629 bus.

4. Device for making an action secure, **characterized in that** it comprises at least one section (1) having at least one pair (4.1 to 4.n) of two mutually independent decision channels, each section comprising a counting device (5.1 to 5.n and 6.1 to 6.n) followed by at least one sequencing device (8, 9), a first comparison device (7.1 to 7.n) being connected to the outputs of the counting devices of a same pair of a same section, and a second comparison device (10) being connected to the outputs of the sequencing devices of a same pair of a same section, the output (8A) of the sequencing device of one of the channels of at least one of the pairs of each section being able to be connected to the inputs of at least one of the pairs of that section.

## Patentansprüche

1. Verfahren zur Sicherung einer Aktion, **dadurch gekennzeichnet, dass** zwei voneinander unabhängige Zählprozesse eingeleitet werden, dass die zeitliche Koinzidenz der Zählenden (M1 und M2) dieser beiden Prozesse überprüft wird, dass ausgehend von den Überprüfungsinformationen jedes dieser beiden Zählprozesse (M2 und C2) gemäß einer spezifischen Ablaufsteuerung der betrachteten Anwendung eine nicht konsolidierte Zwischenaktion (M3 und C3) für jeden der beiden Ablaufsteuerungsprozesse eingeleitet wird, und dass nach der Überprüfung der zeitlichen Koinzidenz der Zwischenaktionen und unter Berücksichtigung möglicher prioritärer externer Aktionen eine resultierende Aktion erzeugt wird, wenn alle notwendigen Bedingungen erfüllt sind.

2. Verfahren nach Anspruch 1, **dadurch gekennzeichnet, dass** die beiden Zählprozesse ausgehend von dem gleichen einfallenden asynchronen Signal eingeleitet werden.

3. Verfahren nach Anspruch 1 oder 2, **dadurch gekennzeichnet, dass** es für einen ARINC 629 Bus eingesetzt wird.

4. Vorrichtung zur Sicherung einer Aktion, **dadurch gekennzeichnet, dass** sie mindestens einen Abschnitt (1) mit mindestens einem Paar (4.1 bis 4.n) von zwei voneinander unabhängigen Entscheidungspfaden aufweist, wobei jeder Abschnitt eine Zählvorrichtung (5.1 bis 5.n und 6.1 bis 6.n), gefolgt von mindestens einer Ablaufsteuerungsvorrichtung (8, 9) aufweist, wobei eine erste Vergleichsvorrichtung (7.1 bis 7.n) mit den Ausgängen der Zählvorrichtungen eines gleichen Paars eines gleichen Abschnitts verbunden ist, und eine zweite Vergleichsvorrichtung (10) mit den Ausgängen der Ablaufsteuerungsvorrichtungen eines gleichen Paars eines gleichen Abschnitts verbunden ist, wobei der Ausgang (8A) der Ablaufsteuerungsvorrichtung eines der Pfade mindestens eines der Paare jedes Abschnitts mit den Eingängen mindestens eines der Paare dieses Abschnitts verbunden sein kann.
